# EUROPEAN PATENT SPECIFICATION

(11) **EP 2 965 629 B1**
(45) Date of publication and mention of the grant of the patent: **24.05.2017**
(21) Application number: 15382302.6
(22) Date of filing: 09.06.2015
(51) Int. Cl.: A22C 11/00

(54) **METHOD FOR PEELING CURED SAUSAGES IN CASING AND PEELING MACHINE**
VERFAHREN ZUM SCHÄLEN VON HARTWÜRSTEN IM DARM UND SCHÄLMASCHINE
PROCÉDÉ DE PELAGE DE SAUCISSON DANS UN TUBAGE ET MACHINE À PELER

(30) Priority: 07.07.2014 ES 201431021 P
(43) Date of publication of application: 13.01.2016
(73) Proprietor: Industries FAC, S.L., 17430 Santa Coloma de Farners (ES)
(72) Inventor: CAMPOS ORTÍZ, Francesc, 17430 Santa Coloma De Farners (ES)
(74) Representative: Manresa Val, Manuel

(56) References cited:
- EP-A1- 0 721 738
- WO-A1-00/36922
- US-A- 6 059 647
- US-A1- 2005 100 644
- US-A1- 2006 257 538

## Description

Method for peeling cured sausages in casing and peeling machine, of the type comprising the following phases: a first phase wherein which a piece of product is placed in a tray-guide and said piece is placed at the end of said tray-guide, a second phase wherein the piece of product is immobilised by immobilising means, characterised in that it comprises: a third phase wherein a first clamp-type mechanism captures the tip of the intestine that wraps the product and pulls it, stretching it, a fourth phase wherein some cutting means cut the intestine at the tip without cutting through it, a fifth phase where the first clamp-type mechanism pulls the intestine downwards, a sixth phase wherein the immobilising means release the piece, a seventh phase wherein advancing means move forward the piece, the piece at the same time passes over the cutting means which cutting means cut the intestine, the intestine being separated downwards by the action of the clamp-type mechanism and an eighth phase wherein once the intestine is separated, the first clamp-type mechanism and the cutting means return to their original position.

### BACKGROUND OF THE INVENTION

Different patents are known in the state of the art that describe methods and machines for peeling cured and non-cured sausage.

Thus, in the state of the art Patent ES2158142 "METODO Y APARATO PARA RETIRAR LA ENVOLTURA DE PIEL DE UN EMBUTIDO" [method and apparatus for removing the skin wrapping from a cured sausage], from the year 1995 in the name of UTVECKLINGSBRYAN SVERIGE AB, which relates to a method for removing the wrapping from a sausage by means of a cut at one of its ends, consisting of various phases. A hook captures a hanging piece of the wrapping very near the cut. The supported hanging piece moves with respect to the sausage in a direction transverse with respect to the longitudinal axis to the sausage, preferably approximately in the tangential direction. The hook and the sausage undergo a relative movement in the longitudinal direction of the latter. The sausage is forced to rotate, at least during piece of the operation for removing the wrapping, approximately around its longitudinal axis. The apparatus for removing the wrapping from a sausage comprises a support for it, a rotating unit which, when co-operating with the product, rotates it the support approximately around its longitudinal axis, a support unit that has a knife for making a cut at one end of the sausage, and at least a first hook for holding a hanging piece of the wrapping very near the cut. The apparatus also has guides along which the rotating unit and the one for supporting move in opposite directions and approximately parallel to the longitudinal axis of the sausage, to remove its wrapping.

Also known is Patent ES2440702 "PROCEDIMIENTO Y APARATO DE RETIRADA DE LA PIEL DE UN PRODUCTO ALIMENTICIO" [procedure and apparatus for removing the skin from a food product", from the year 2010, in the name of ETABLISSEMENTS COLLARD PELLISON, which relates to a procedure for removing the skin from a food product, such as a sausage, which extends in a longitudinal direction, comprising the following phases: a) making at least one notch in the skin at the end of the product to obtain a limited opening at least with two overlaps; b) perforating the skin on either side of said notch using perforating devices; c) pivoting the perforating devices; in order to separate the overlaps limiting said notch to widen said opening; d) moving the product relatively with respect to the perforating devices in the longitudinal direction of the product.

It is worth mentioning document US6725631 "APPARATUS AND METHOD FOR STRIPPING FILMING CASES FROM PRODUCTS", from the year 2001, in the name of Mr. Branko Skrak, et al., which relates to a machine and a method for processing products packaged in a film by separating said film from said products. The packaged product moves through various phases, which include a first phase wherein the skin is weakened, a second phase wherein one of the ends of said skin is grasped by a clamp and lastly a third phase wherein the skin is pulled as the product advances. As a consequence of the skin being weakened, the skin separates from the product.

Lastly, it is necessary to highlight document US4637095 "METHOD AND APPARATUS FOR PEELING SAUSAGE", from the year 1985, in the name of Mr. Gerard MARUSKA, which relates to a method and apparatus for removing the wrapping or the skin from a sausage that consists in supplying said sausages to rollers to that said sausages move both longitudinally and rotationally, next the tip of the sausage is cut, a pair of peeling rollers capture the knot or piece of cut skin, with the peeling rollers moving to a position tangent to the sausage supply trajectory and then pulling the piece of skin and a piece next to the housing through the peeling rollers and radially outwards to remove the skin according to a helicoidal pattern.

### BRIEF DESCRIPTION OF THE INVENTION

This application comes under the sector of machines for peeling cured products.

The closest documents are US 2005/100644 and US4637095.

One of the drawbacks that features in some of the patents mentioned in the background above, is that they require a phase wherein an operator cuts the tip of the cured sausage, with the drawback that the whole machine and peeling process cannot be automated.

Said document solves the problem of removing the skin by cutting the tip of the sausage and immediately moving the tray in order to stretch said skin so that it is captured by oppositely arranged lower peelers rollers that pull said skin, once the sausage advances.

The problem with this invention is on the one hand that if the sausage has been closed with a clip or the like, the rollers will not be able to capture it. Furthermore, the cutting system with the blades is fixed and not adaptable to the possible irregularities of, for example, cured loin of loin of pork.

So, this way, the inventor has solved the first of the problems by means of a first clamp-type mechanism that captures the skin and pulls it forwards, stretching it, and downwards, this way it does not matter if the sausage ends in staples, knots or any other system, because either way it will be captured by the clamp.

To solve the adaptability to cured sausages with irregular surface, the cutting means comprise two cutting movements, a transversal movement that works by means of an up and down movement, that does not completely cut the tip, and another longitudinal movement, wherein the same cutting means comprise other cutting means that run above the cured sausage as it advances, cutting the intestine.

This way, first of all the peeling process is automated, since human intervention is not necessary in the initial cut, secondly this invention can be used even when the tip has staples or knots and lastly, it can be used to cut cured products with an irregular contour.

The first object of this invention is a method for peeling cured sausages in casing according to claim 1, of the type comprising the following phases: a first phase in which a piece of product is placed in a tray-guide and said piece is placed at the end of said tray-guide, a second phase in which the piece of product is immobilised by immobilising means, characterised in that it comprises: a third phase in which a first clamp-type mechanism captures the tip of the intestine that wraps the product and pulls it, stretching it, a fourth phase wherein some cutting means cut the intestine at the tip without cutting through it, a fifth phase where the first clamp-type mechanism pulls the intestine downwards, a sixth phase wherein the immobilising means release the piece, a seventh phase wherein advancing means move forward the piece, the piece at the same time passes over the cutting means which cutting means cut the intestine, the intestine being separated downwards by the action of the clamp-type mechanism and an eighth phase wherein once the intestine is separated, the first clamp-type mechanism and the cutting means return to their original position.

The second object of this invention is a peeling machine for sausages in casing according to claim 8, of the type comprising a tray-guide, wherein the product pieces to be peeled are arranged, and means for immobilising the product piece in the tray-guide, characterised in that it comprises a first clamp-type mechanism capturing the tip of the intestine wrapping the product, which it pulls and stretches, and subsequently pulls downwards, cutting means that cut the intestine at the tip without cutting through it, and advancing means that advance the piece, with the said cutting means that cut the intestine passing at the same time above the piece, being the intestine separated downwards due to the action of the clamp-type mechanism.

### BRIEF DESCRIPTION OF THE DRAWINGS

In order to facilitate the explanation, this specification is provided with twelve sheets of drawings illustrating a practical embodiment, which is provided as a non-limiting example of the scope of this invention:
Figure 1 is an elevation view of the machine that is the object of this invention.
Figure 2 is a top plan view of said machine.
Figure 3 is a detail of the supply module.
Figure 4 is an elevation detail, in perspective with different pieces of the machine removed, showing the moment prior to cutting the intestine.
Figure 5 is another more detailed, plan view in perspective.
Figure 6 is a detail of the cutting means.
Figure 7 is a detail of the first clamp-type mechanism.
Figure 8 is a detail of the third clamp-type mechanism.
Figure 9 is a perspective view of the machine that is the object of this invention.
Figure 10 is a partial view of the seventh phase.
Figure 11 is a partial view of the ninth phase, and
Figure 12 is partial view of the tenth phase.

### SPECIFIC EMBODIMENT OF THE INVENTION

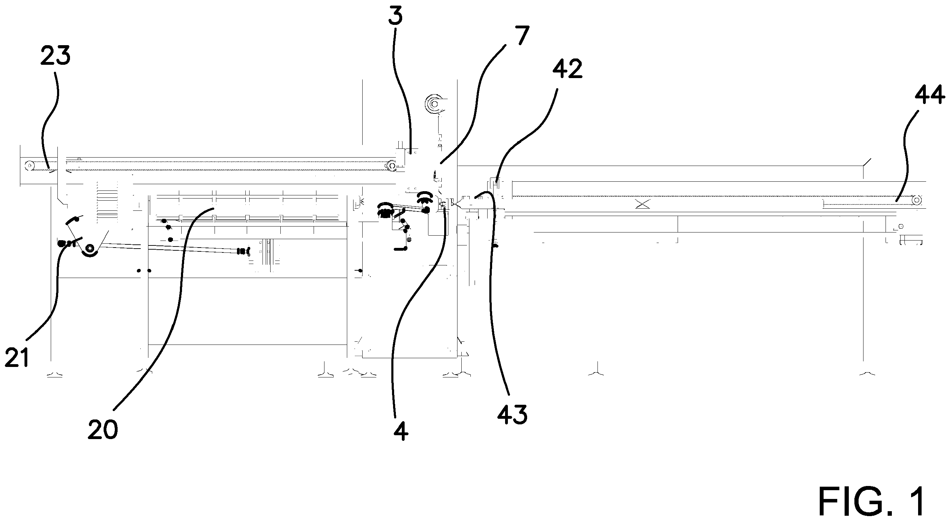

So, Figure 1 illustrates a conveyor 20, a loader 21, a motorised carriage 23, immobilising means 3, a first clamp-type mechanism 4, cutting means 7, a second clamp-type mechanism 42 with its motorised carriage 44, and a third clamp-type mechanism 43.

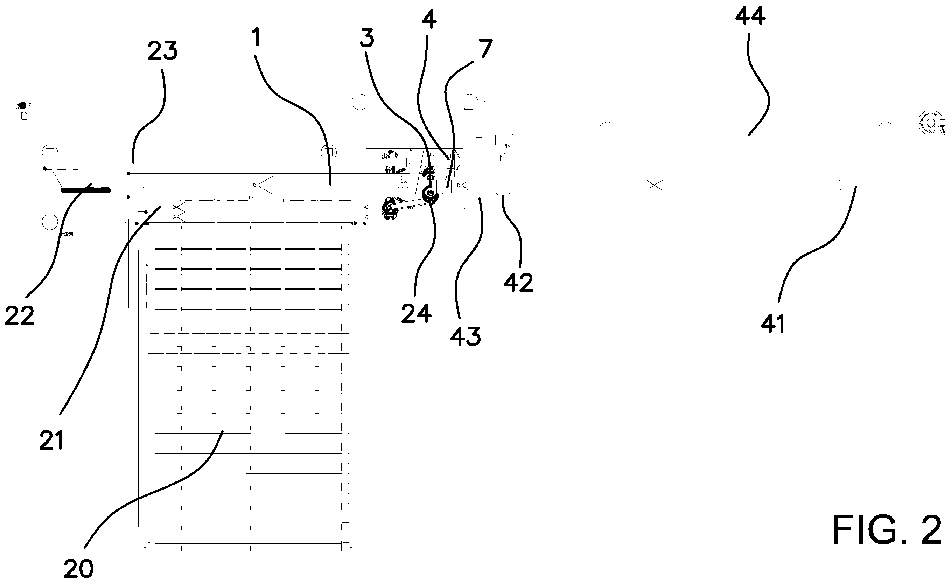

Figure 2 shows conveyor 20, loader 21, an actuator 22, the motorised carriage 23, a product piece 1, immobilising means 3, the first clamp-type mechanism 4, rollers 24, cutting means 7, the second clamp-type mechanism 42 with its motorised carriage 44, a tray 41 and the third clamp-type mechanism 43.

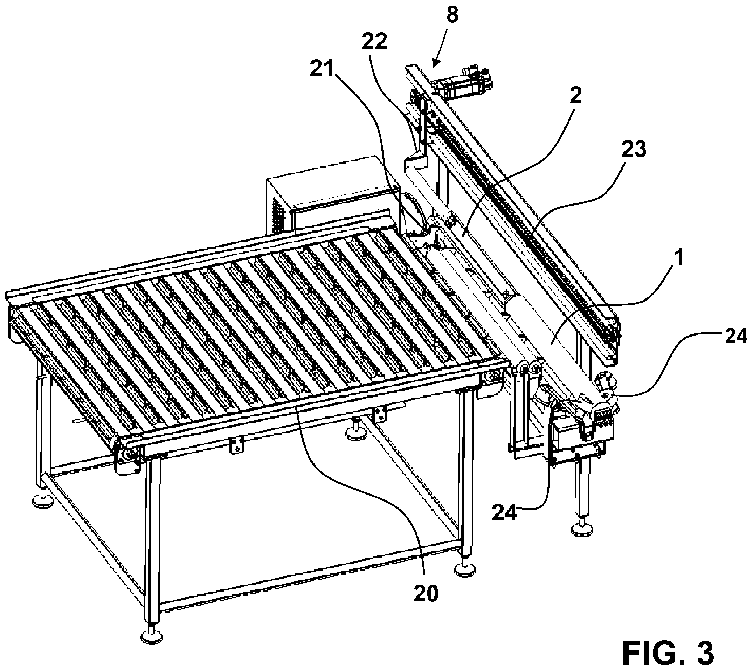

Figure 3 shows conveyor 20, loader 21, actuator 22 with its motorised carriage 23, product piece 1, tray-guide 2, and rollers 24.

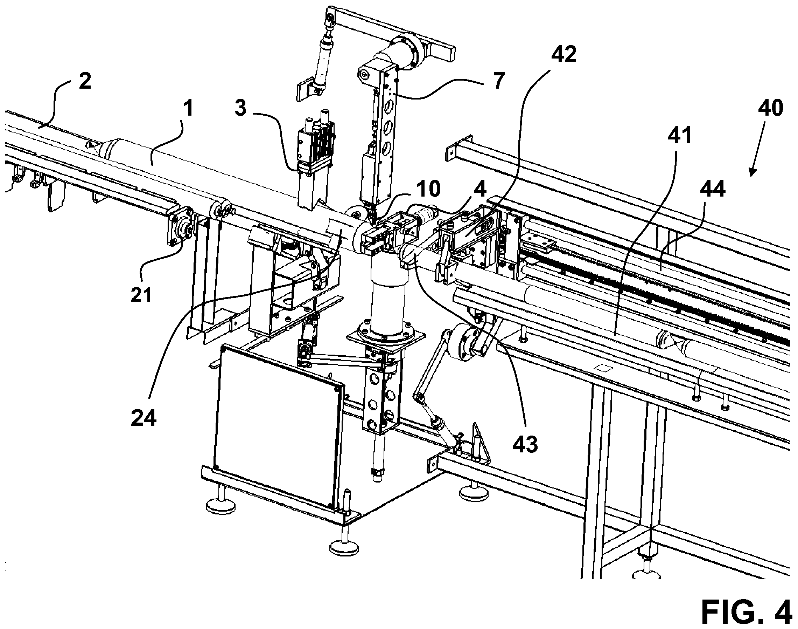

Figure 4 shows tray-guide 2, product piece 1, loader 21, rollers 24, cutting means 7, transversal blades 10, first clamp-type mechanism 4, workstation 40 with the second clamp-type mechanism 42 and its motorised carriage 44, the third clamp-type mechanism 43, and a tray 41.

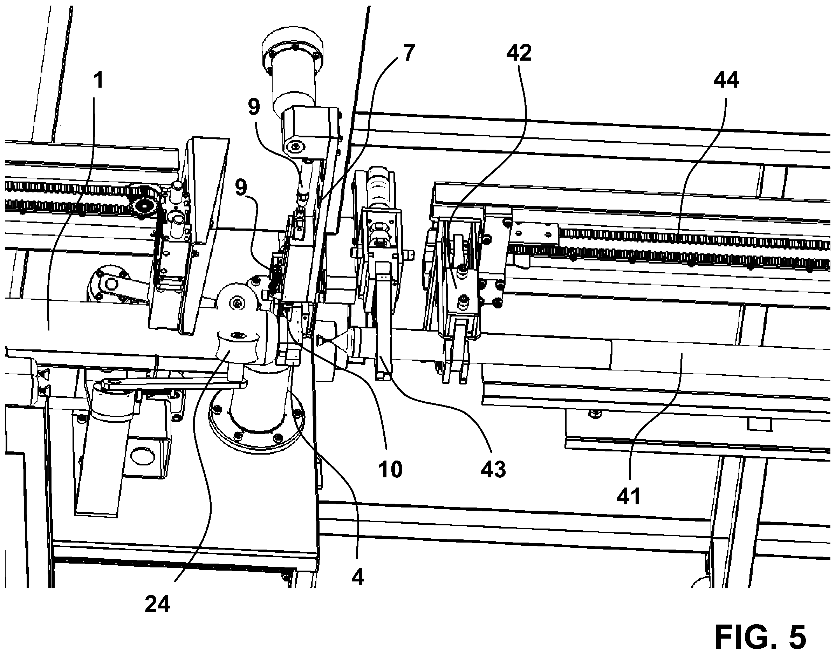

Figure 5 shows product piece 1, rollers 24, cutting means 7 with their swinging and dampening means 9, transversal blades 10, first clamp-type mechanism 4, second clamp-type mechanism 42 and its motorised carriage 44, third clamp-type mechanism 43, and lastly tray 41.

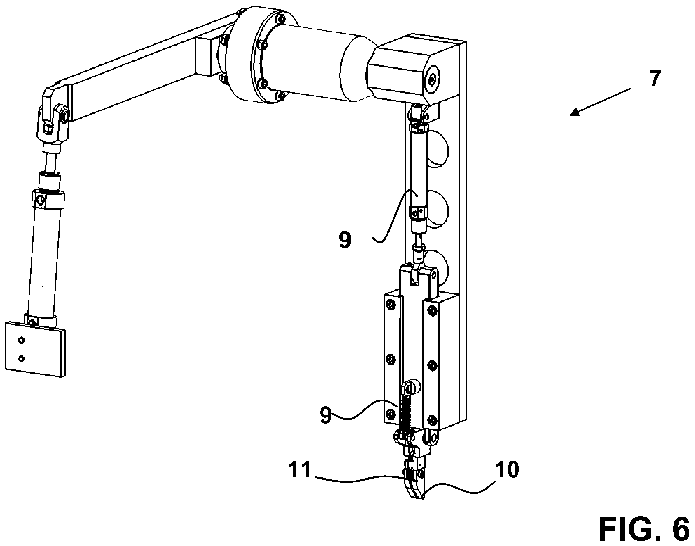

Figure 6 shows cutting means 7, with the swinging and dampening means 9, transversal blades 10, and some longitudinal blades 11.

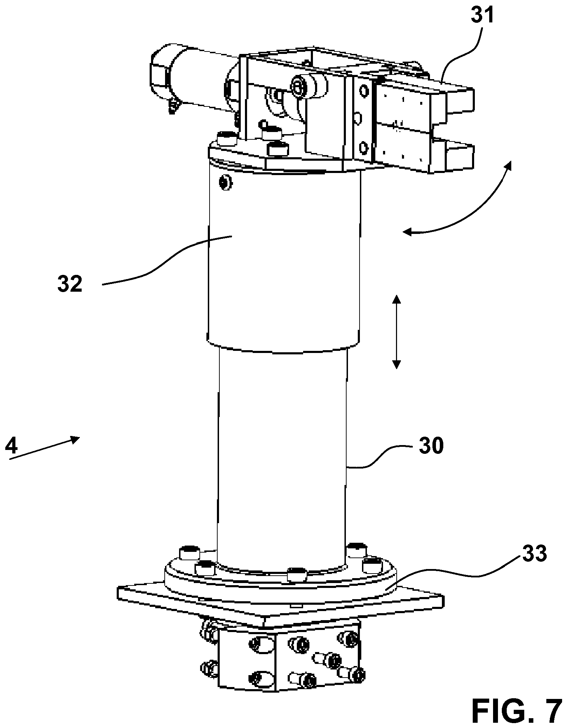

Figure 7 shows the first clamp-type mechanism 4, an axis 30, a piston 32, a rotary base 33 and a clamp 31.

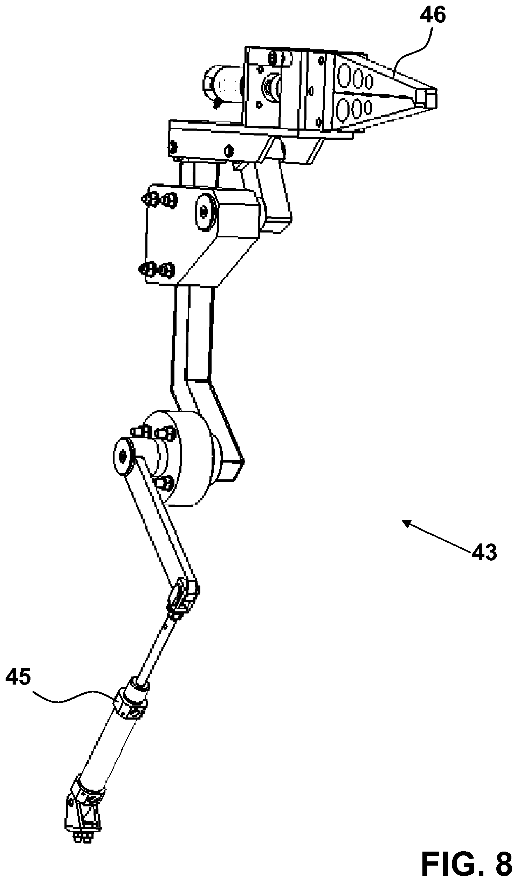

Figure 8 shows third clamp-type mechanism 43, with the clamp 46, and swinging means 45.

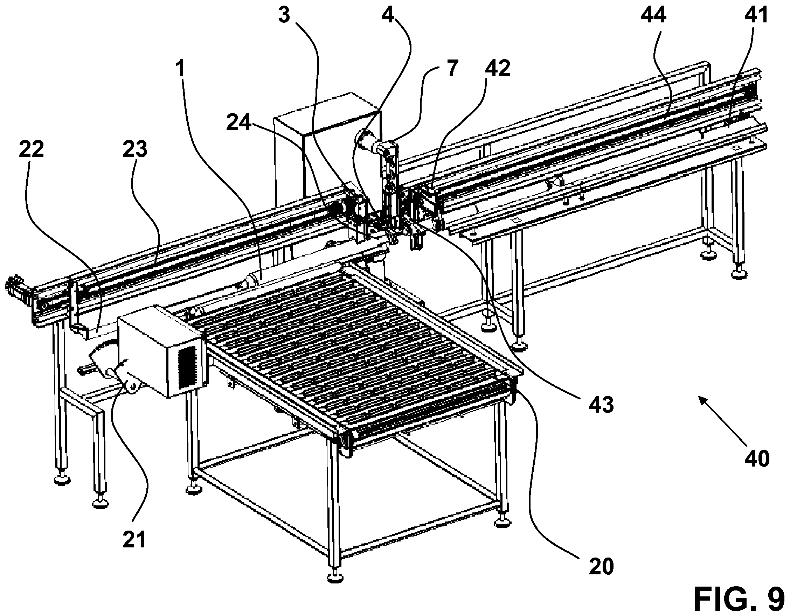

Figure 9 shows conveyor 20, loader 21, actuator 22, motorised carriage 23, product piece 1, immobilising means 3, first clamp-type mechanism 4, rollers 24, cutting means 7, workstation 40 and second clamp-type mechanism 42 and its motorised carriage 44, tray 41 and third clamp-type mechanism 43.

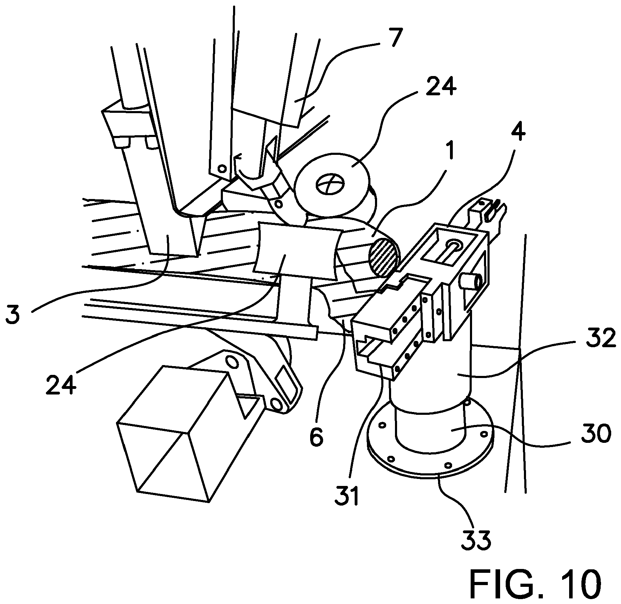

Figure 10 shows product piece 1, rollers 24, cutting means 7, immobilising means 3, intestine 6, first clamp-type mechanism 4 with its axis 30, its clamp 31, its rotary base 33 and its piston 32.

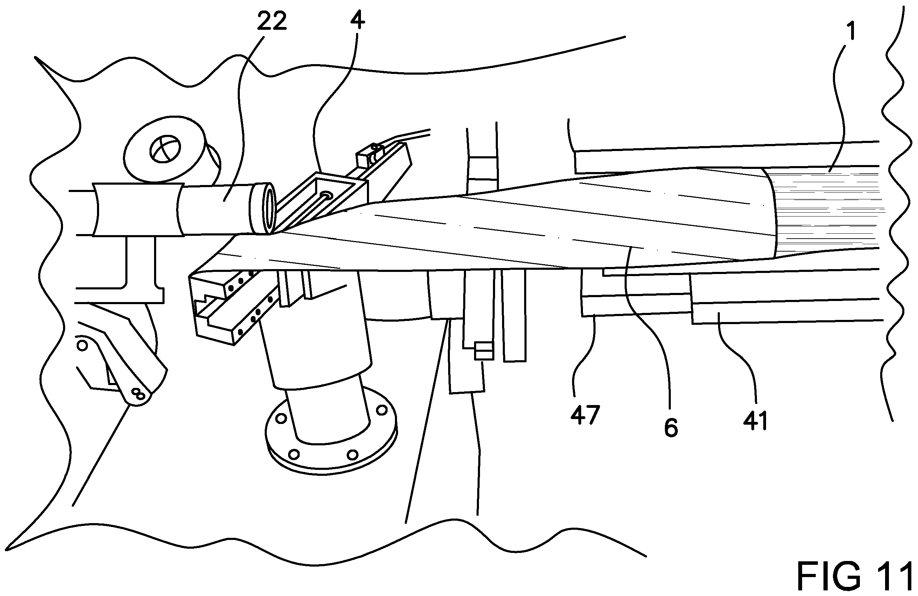

Figure 11 shows actuator 22, first clamp-type mechanism 4, intestine 6, tray 41 with its extender 47 and piece 1 without intestine.

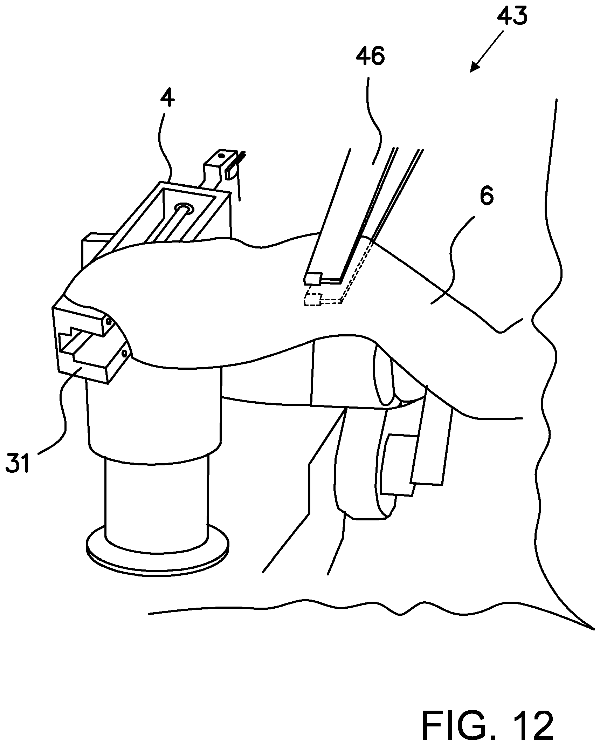

Lastly, Figure 12 shows first clamp-type mechanism 4 and its clamps 31, third clamp-type mechanism 43 with its clamps 46 and intestine 6.

Thus, in a specific embodiment, the method for peeling sausage in casing would comprise the following phases:
In the first phase a product piece 1 would be arranged, in this embodiment, cured loin of loin of pork, since it is a product with an irregular exterior, on tray-guide 2 and said piece 1 is placed at the end of said tray-guide 2. This phase can be done manually, with an operator who places piece 1 of loin of pork on tray-guide 2, or automatically as will be explained below.
In the second phase the loin of loin of pork 1 is blocked and immobilised by immobilising means 3. Said immobilisation is needed to ensure the cut that will be made in the subsequent phases.

The immobilising means can be varied. For example, in this embodiment, an arched shaped pressing element has been considered, so that the product is immobilised and blocked on the sides and at the top thereof.

In the third phase the first clamp-type mechanism 4, which is in front of loin of loin of pork 1, captures tip 5 from the intestine of the loin of loin of pork using its clamps 31 and pulls it forward. This means that as loin of pork 1 is immobilised by immobilising means 3, the intestine 6 is tensed.

In the fourth phase, cutting means 7 cut the intestine at tip 5, in the area that has been tensed, but without cutting through it, as it is intended to be able to continue pulling intestine 6 shortly afterwards.

Next, in the fifth phase, first clamp-type mechanism 4, which has tip 5 pulled forward, moves down, consequently pulling intestine 6 and breaking intestine 6, releasing a piece of loin of pork 1.

Next, already in the sixth phase, immobilising means 3, which kept loin of pork 1 immobilised and blocked, releasing it leaving it free to be able to move, due to the action of the other piece of the machine.

Subsequently, in the seventh phase advance means 8 advance piece 1. At the same time cutting means 7 pass over loin of pork 1 cutting intestine 6 longitudinally. Furthermore, intestine 6 separates from loin of pork 1 due to the action of clamp-type mechanism 4 that pulls the skin downwards.

The last basic phase is the eighth wherein once intestine 6 is separated first clamp-type mechanism 4 and cutting means 7 return to their initial position.

Optionally, in the third phase, it has been found that the cutting and stretching manoeuvre is facilitated if, first clamp-type mechanism 4, when it pulls tip 5, ends up forming a tensed cone, as this allows the cut to be partial and as desired.

Also in the seventh phase, optionally (see Figure 10), cutting means 7 cut intestine 6, by means of a swinging and dampening system 9, for example springs and a piston, that adapts cutting means 7 to the contour of piece 1, so that cutting means 7 adapt to the contour of intestine 6.

Cutting means 7 can comprise transverse blades 10 that cut intestine 6 transversally, or in other words, the cut made in the fourth phase.

Similarly, they could contain longitudinal blades 11 that cut intestine 6 longitudinally. This cut allows intestine 6 to open when loin of pork 1 advances, because since first clamp-type mechanism 4 still has held in its clamps 31 the intestine of tip 5, it pulls intestine 6 in the opposite direction to the advance direction of loin of pork 1 (see Figure 10).

To automate the loading phase optionally, a previous phase would be established wherein pieces 1 are arranged on a conveyor 20, that advances unloading at least one piece 1, depending on the length of said conveyor 20, on a loader 21 that places the loin of pork 1 on tray-guide 2. Subsequently, loin of pork 1 is pushed to the end of tray-guide 2 by an actuator 22 that pushes it to said end.

It has been envisaged that for this embodiment loader 21 comprises a pneumatic lifting device. This device would facilitate extracting the loin of pork 1 from loader 21 and easily and quickly placing it on tray-guide 2.

There is also the possibility that loin of pork 1, upon reaching the end of tray-guide 2 pushed by actuator 22, before proceeding with the cutting operation, is centred by rollers 24. Said rollers 24 adapt to the diameter of each piece of loin of pork 1, so that they enable fully reliable centring.

The forward movement of clamp 31 in the advance direction of loin of pork 1, of clamp-type mechanism 4, is produced by means of axis 30, on which said clamp-type mechanism 4 is supported, and turning thanks, for example, to a rotary base 33. This causes the tensing of tip 5 of intestine 6, which subsequently will be partially cut.

As indicated above, clamp-type mechanism 4 makes a movement downwards thanks to some raising means 32 located in axis 30 (see Figure 10). These raising means 32, for example a piston, in the fifth phase, make clamp-type mechanism 4 descend which pulls intestine 6 downwards. Subsequently, in the last phase, when the initial position of clamp-type mechanism 4 is recovered, these means make the raising movement to the initial position.

Additionally, the method can comprise a ninth phase (see Figure 11) which is carried out in a workstation 40, located as a continuation of first clamp-type mechanism 4.

The loin of pork is pushed by actuators 22 towards the new workstation 40 that comprises a tray 41 where loin of pork 1 is deposited. Said tray 41 covers the gap between first clamp-type mechanism 4 and the second clamp 42 by means of an extender 47 when loin of pork 1 is being pushed by actuators 22 and then said extender 47 is collected when piece 1 is already on tray 41.

Said loin of pork 1 is captured by the second clamp-type mechanism 42 by the area already peeled, due to the pulling of the first clamp-type mechanism 4, and next said second clamp-type mechanism 42 moves along tray 41.

The second clamp-type mechanism 42 pulls piece 1, thanks to the movement of motorised carriage 44, leaving at the same time loin of pork 1 held in the area of intestine 6 by first clamp-type mechanism 4, which causes the loin of pork 1 to move forward and lose the intestine 6 that was covering it, with said intestine 6 being held by said first clamp-type mechanism 4.

Once loin of pork 1 without skin has been released from intestine 6, third clamp-type mechanism 43 captures intestine 6 by means of its clamps 46 (see Figure 12) and in turn first clamp-type mechanism 4 opens its clamps 31 and releases intestine 6. Said third clamp-type mechanism 43 is provided with swinging means 45 that allow moving the mechanism and for depositing intestine 6 in a tray or container.

Third clamp-type mechanism 43, is located between the first 4 and the second 42.

The peeling machine for cured sausage in casing, connects with the method explained above, and therefore it is equally understood to be included in the description that helps to clarify the content of this machine.

Thus, the machine comprises in one of the basic embodiments a tray-guide 2, where product pieces 1 to be peeled are placed, for example, loin of pork 1, due to its irregularities as indicated above and for the difficulties involved in peeling it. It also comprises immobilising means 3 for product piece 1 on tray-guide 2.

It also comprises first clamp-type mechanism 4 that captures tip 5 of intestine 6 that wraps product 1, which said clamp-type mechanism 4 pulls and stretches in the advance direction of loin of pork 1, and subsequently pulls it downwards.

It also includes cutting means 7 that descend cutting intestine 6 at tip 5 with cutting through it.

Lastly, it comprises advancing means 8 that advance piece 1 once the first cut has been made, with said cutting means 7 that cut intestine 6 passing at the same time above piece 1, separating intestine 6 downwards due to the action of clamp-type mechanism 4.

Cutting means (see Figure 6) comprise a swinging and dampening system 9 that adapts cutting means 7 to the contour of piece 1 and cut intestine 6 transversally and longitudinally, facilitating the subsequent separation of intestine 6 from loin of pork 1 without skin or intestine 6.

To facilitate the cuts, cutting means 7 comprise transverse blades 10 that cut intestine 6 transversally, in other words, the cut that is made in the fourth phase of the method, and longitudinal blades 11 that cut the intestine 6 longitudinally, that is, the cut that is made in the seventh phase of the method.

Optionally, if it is desired to automate the machine a conveyor 20 can be provided that advances unloading at least one loin of pork 1 onto a loader 21 that places it on tray-guide 2.

Then loin of pork 1 is pushed towards the end of tray-guide 2 by actuator 22 which advances it to said end.

Loader 21 can be provided with a pneumatic raising device that takes the loin of pork 1 out of loader 21 and place it on tray-guide 2. This makes is possible to place any loin of pork on tray-guide 2, regardless of its diameter.

It can also comprise rollers 24, which centre loin of pork 1 as it approaches the end of tray-guide 2.

Clamp-type mechanism 4 comprises an axis 30 on which said clamp-type mechanism 4 is supported with a rotation movement in the advance direction of piece 1 that pulls tip 5 of intestine 6, to facilitate the subsequent cut made by transverse blades 10.

Axis 30, as explained above, makes downwards and raising movements to tense intestine 6. To this end it comprises raising means, in this case a piston 32, which causes clamp-type mechanism 4 to go down when it pulls intestine 6 downwards and makes it go upwards when the peeling is completed.

It is possible to set up a working station 40, following from the first clamp-type mechanism 4, to further automate if necessary the removal of intestine 6. So, said workstation 40 comprises a tray where loin of pork 1 is deposited.

It is also provided with a second clamp-type mechanism 42 that captures said loin of pork 1. It makes a movement along tray 41, which optionally can be produced by a motorised carriage 44 connected to said second clamp-type mechanism 42.

Said tray 41 covers the gap between first clamp-type mechanism 4 and the second clamp-type mechanism 42 by means of an extender 47 when loin of pork 1 is being pushed by actuators 22 and then said extension 47 is collected when piece 1 is already on tray 41.

It also comprises a third clamp-type mechanism 43, which is located between the first 4 and the second 42.

So, said third clamp-type mechanism 43 captures intestine 6 once it has been released from loin of pork 1 by second clamp-type mechanism 42, also leaving said intestine 6 held by clamps 46 of third clamp-type mechanism 43.

Said second clamp-type mechanism 42, grasps or clamps loin of pork 1 by the piece that is free of intestine 6, so that when it pulls the loin of pork, since intestine 6 is captured by first clamp-type mechanism 4, and when second clamp-type mechanism 42 moves due to the action of motorised carriage 44, loin of pork 1 is freed from the skin or intestine 6, leaving the loin of pork free without skin or intestine 6 at the end of the operation, only caught by clamps 46 of third clamp-type mechanism 43 (see Figure 12).

This way, irrespective of the irregular contours of the food product being used, this method and machine can be used to remove the intestine 6 or skin from cured food products.

This invention describes a new method for peeling cured sausages in casing and peeling machine. The examples mentioned herein are not limiting of this invention, therefore it may have various applications and/or adaptations, all within the scope of the following claims.

## Claims

1. Method for peeling cured sausages in casing, of the type comprising the following phases:
a first phase wherein which a piece of product (1) is placed in a tray-guide (2) and said piece (1) is placed at the end of said tray-guide (2),
a second phase wherein the piece of product (1) is immobilised by immobilising means (3),
a third phase wherein a first clamp-type mechanism (4) captures tip (5) of intestine (6) that wraps product (1) and pulls it, stretching it,
a fourth phase wherein some cutting means (7) cut intestine (6) at the tip without cutting through it,
a fifth phase wherein first clamp-type mechanism (4) pulls intestine (6) downwards,
a sixth phase wherein the immobilising means (3) release piece (1),
a seventh phase wherein advancing means (8) move forward the piece (1), the piece at the same time passes over the cutting means (7) which cutting means cut the intestine (6), the intestine (6) being separated downwards by the action of the clamp-type mechanism (4),
an eighth phase wherein once the intestine (6) is separated, the first clamp-type mechanism (4) and the cutting means (7) return to their original position,
**characterised in that** it comprises:
a ninth phase wherein piece (1) is pushed towards a new workstation (40) which comprises a tray (41) where piece (1) is placed, where it is captured by a second clamp-type mechanism (42) that moves along tray (41), with second clamp-type mechanism (42) pulling piece (1), with said second clamp-type mechanism (42) releasing piece (1) from intestine (6).

2. Method according to claim 1, **characterised in that** in the third phase, first clamp-type mechanism (4) pulls tip (5), stretching it, forming a tensed cone.

3. Method according to claim 1, **characterised in that** in the seventh phase cutting means (7) cut intestine (6) by means of a swinging and dampening system (9) that adapts cutting means (7) to the contour of piece (1), and **in that** cutting means (7) comprise transverse blades (10) that cut intestine (6) transversally and longitudinal blades (11) that cut intestine (6) longitudinally.

4. Method according to claim 1, **characterised in that** prior to the first phase it comprises a previous phase wherein pieces (1) are arranged on a conveyor (20) that advances unloading at least one piece (1) on a loader (21) that places piece (1) on tray-guide (2), being said piece (1) pushed to the end of tray-guide (2) by an actuator (22) that pushes it to said end.

5. Method according to claim 4, **characterised in that** during the trajectory of piece (1) which is pushed to the end of tray-guide (2) by an actuator (22), piece (1) is centred by rollers (24).

6. Method according to any of the claims 1 or 2, **characterised in that** clamp-type mechanism (4) comprises an axis (30) on which there is supported said clamp-type mechanism (4) which in the third phase rotates in the advance direction of piece (1) tightening tip (5) of intestine (6), and **in that** axis (30) comprises raising means (32) which in the fifth phase make clamp-type mechanism (4) to go down pulling the intestine (6) downwards.

7. Method according to claim 1, **characterised in that** it comprises a tenth phase wherein a third clamp-type mechanism (43), placed between the first (4) and the second (42) captures intestine (6), once piece (1) has been freed from intestine (6) and said third clamp-type mechanism (43) swings and places the intestine (6) in a container.

8. Machine for peeling cured sausage in casing, of the type comprising
a tray-guide (2), where pieces of product (1) to be peeled are placed, and immobilising means (3) of product piece (1) in tray-guide (2),
a first clamp-type mechanism (4) that captures tip (5) of intestine (6) that wraps the piece (1), which tightens and pulls in the advance direction of piece (1), and subsequently it pulls downwards, cutting means (7) that cut the intestine (6) at tip (5) without cutting through it, and
advance means (8) that advance the piece (1), with said cutting means (7) there passing at the same time above piece (1) said cutting means (7) that cut longitudinally the intestine (6), with intestine (6) separating downwards due to the action of the clamp-type mechanism (4),
**characterised in that** it comprises a workstation (40) that comprises:
a tray (41) where piece (1) is placed, and
a second clamp-type mechanism (42) which captures said piece (1) and which comprises a movement along tray (41),
with second clamp-type mechanism (42) pulling piece (1), with said second clamp-type mechanism (42) releasing piece (1) from intestine (6).

9. Machine, according to claim 8, **characterised in that** cutting means (7) comprise a swinging and dampening system (9) that adapts cutting means (7) to the contour of piece (1) and cut intestine (6) transversally and longitudinally and **in that** cutting means (7) comprise transverse blades (10) that cut intestine (6) transversally and longitudinal blades (11) that cut intestine (6) longitudinally.

10. Machine, according to claim 8, **characterised in that** it comprises a conveyor (20) that makes advances unloading at least one piece (1) onto a loader (21) that places it on tray-guide (2), being said piece (1) pushed to the end of tray-guide (2) by an actuator (22) that pushes it to said end.

11. Machine, according to claim 10, **characterised in that** it comprises rollers (24), centring piece (1) when approaching the end of tray-guide (2).

12. Machine, according to claim 8, **characterised in that** first clamp-type mechanism (4) comprises an axis (30) on which said clamp-type mechanism (4) is supported with a rotation movement in the advance direction of piece (1) that tightens tip (5) of intestine (6) and **in that** axis (30) comprises rising means (31) which make clamp-type mechanism (4) go down when it pulls intestine (6) downwards and make it raise at the end of the peeling.

13. Machine, according to claim 8, **characterised in that** second clamp-type mechanism (42) comprises a motorised carriage (44) that moves said second clamp-type mechanism (42) above tray (41), and **in that** said tray (41) comprises an extender (47) that extends and which covers the space between first clamp-type mechanism (4) and the second (42) and **in that** it collects said extender (47) as piece (1) advances above said tray (41).

14. Machine, according to claim 8, **characterised in that** it comprises a third clamp-type mechanism (43), between the first (4) and the second (42), that capturing the intestine (6) released from piece (1).

## Patentansprüche

1. Verfahren zum Schälen geräucherter Würste in Wursthülle, derart, dass es die folgenden Phasen umfasst:
eine erste Phase, wobei ein Produktstück (1) in einer Schale-Führung (2) platziert wird und das Stück (1) am Ende der Schale-Führung (2) platziert wird, eine zweite Phase, wobei das Produktstück (1) durch Feststellmittel (3) festgestellt wird,
eine dritte Phase, wobei ein erster klammerartiger Mechanismus (4) eine Spitze (5) von einem Darm (6) ergreift, der das Produkt (1) umhüllt, und daran zieht, sie streckt,
eine vierte Phase, wobei einige Schneidemittel (7) den Darm (6) an der Spitze schneiden, ohne ihn durchzuschneiden, eine fünfte Phase wobei erste klammerartige Mechanismus (4) den Darm (6) abwärts ziehen,
eine sechste Phase, wobei die Feststellmittel (3) das Stück (1) loslassen,
eine siebte Phase, wobei Vorstellmittel (8) das Stück (1) vorwärtsbewegen, das Stück gleichzeitig über die Schneidemittel (7) läuft, wobei die Schneidemittel den Darm (6) schneiden, wobei der Darm (6) durch die Wirkung des klammerartigen Mechanismus (4) abwärts getrennt wird,
eine achte Phase, wobei nach Trennen des Darms (6) der erste klammerartige Mechanismus (4) und die Schneidemittel (7) zu ihrer Ausgangsposition zurückkehren,
**dadurch gekennzeichnet, dass** es umfasst:
eine neunte Phase, wobei das Stück (1) zu einer neuen Arbeitsstation (40) geschoben wird, die eine Schale (41) umfasst, wo das Stück (1) platziert wird, wo es von einem zweiten klammerartigen Mechanismus (42) ergriffen wird, der sich entlang der Schale (41) bewegt, wobei der zweite klammerartige Mechanismus (42) das Stück (1) zieht und wobei der zweite klammerartige Mechanismus (42) das Stück (1) aus dem Darm (6) löst.

2. Verfahren nach Anspruch 1, **dadurch gekennzeichnet, dass** in der dritten Phase der erste klammerartige Mechanismus (4) die Spitze (5) zieht, sie streckt und einen gespannten Kegel bildet.

3. Verfahren nach Anspruch 1, **dadurch gekennzeichnet, dass** in der siebten Phase die Schneidemittel (7) den Darm (6) mittels eines Pendel- und Anfeuchtsystems (9), das die Schneidemittel (7) an die Kontur des Stücks (1) anpasst, schneidet, und dass die Schneidemittel (7) Querschneiden (10) umfassen, die den Darm (6) in Querrichtung schneiden, und Längsschneiden (11), die den Darm (6) in Längsrichtung schneiden.

4. Verfahren nach Anspruch 1, **dadurch gekennzeichnet, dass** es vor der ersten Phase eine vorherige Phase umfasst, wobei die Teile (1) auf einem Förderer (20) angeordnet werden, der vorwärtsläuft und mindestens ein Stück (1) auf einer Ladeeinheit (21) ablädt, die dieses Stück (1) auf der Schale-Führung (2) platziert, wobei das Stück (1) von einem Stellglied (22) zum Ende der Schale-Führung (2) geschoben wird, das es zum diesem Ende schiebt.

5. Verfahren nach Anspruch 4, **dadurch gekennzeichnet, dass** das Stück (1) während des Verlaufs des Stücks (1), das von einem Stellglied (22) zum Ende der Schale-Führung (2) geschoben wird, durch Rollen (24) zentriert wird.

6. Verfahren nach einem der Ansprüche 1 oder 2, **dadurch gekennzeichnet, dass** der klammerartige Mechanismus (4) eine Achse (30) umfasst, auf der der klammerartige Mechanismus (4) getragen wird, der in der dritten Phase in die Vorlaufrichtung des Stücks (1) dreht, die Spitze (5) des Darms (6) spannend, und dass die Achse (30) Anstiegsmittel (32) umfasst, die in der fünften Phase den klammerartigen Mechanismus (4) nach unten zu gehen und den Darm (6) abwärts zu ziehen veranlässt.

7. Verfahren nach Anspruch 1, **dadurch gekennzeichnet, dass** es eine zehnte Phase umfasst, wobei ein dritter klammerartiger Mechanismus (43), platziert zwischen dem ersten (4) und dem zweiten (42) den Darm (6) ergreift, nachdem das Stück (1) aus dem Darm (6) befreit wurde und der dritte klammerartige Mechanismus (43) pendelt und den Darm (6) in einem Behälter platziert.

8. Maschine zum Schälen einer geräucherten Wurst in Wursthülle, derart, dass es umfasst
eine Schale-Führung (2), wo zu schälende Produktstücke (1) platziert werden, und Feststellmittel (3) für ein Produktstück (1) in einer Schale-Führung (2),
einen ersten klammerartigen Mechanismus (4), der eine Spitze (5) von einem Darm (6) ergreift, der das Stück (1) umhüllt, der spannt und in die Vorlaufrichtung des Stücks (1) zieht, und ihn nachfolgend abwärts zieht, Schneidemittel (7), die den Darm (6) an der Spitze (5) schneiden, ohne ihn durchzuschneiden, und Vorstellmittel (8), die das Stück (1) vorstellen, wo die Schneidemittel (7) dort zur gleichen Zeit über das Stück (1) verlaufen, wobei die Schneidemittel (7) den Darm (6) in Längsrichtung schneiden, wobei der Darm (6) durch die Wirkung des klammerartigen Mechanismus (4) abwärts getrennt wird,
**dadurch gekennzeichnet, dass** sie eine Arbeitsstation (40) umfasst, die umfasst:
eine Schale (41), wo das Stück (1) platziert wird, und
einen zweiten klammerartigen Mechanismus (42), der das Stück (1) ergreift, und der eine Bewegung entlang der Schale (41) umfasst,
wobei der zweite klammerartige Mechanismus (42) das Stück (1) zieht und der zweite klammerartige Mechanismus (42) das Stück (1) aus dem Darm (6) löst.

9. Maschine nach Anspruch 8, **dadurch gekennzeichnet, dass** die Schneidemittel (7) ein Pendel- und Anfeuchtsystem (9) umfassen, das die Schneidemittel (7) an die Kontur des Stücks (1) anpasst und den Darm (6) in Quer- und Längsrichtung schneidet, und dass die Schneidemittel (7) Querschneiden (10) umfassen, die den Darm (6) in Querrichtung schneiden, und Längsschneiden (11), die den Darm (6) in Längsrichtung schneiden.

10. Maschine nach Anspruch 8, **dadurch gekennzeichnet, dass** sie einen Förderer (20) umfasst, der vorwärtsläuft und mindestens ein Stück (1) auf einer Ladeeinheit (21) ablädt, die es auf der Schale-Führung (2) platziert, wobei das Stück (1) von einem Stellglied (22) zum Ende der Schale-Führung (2) geschoben wird, das es zum diesem Ende schiebt.

11. Maschine nach Anspruch 10, **dadurch gekennzeichnet, dass** sie Rollen (24) umfasst, die das Stück (1) zentrieren, wenn es sich dem Ende der Schale-Führung (2) nähert.

12. Maschine nach Anspruch 8, **dadurch gekennzeichnet, dass** der erste klammerartige Mechanismus (4) eine Achse (30) umfasst, auf der der klammerartige Mechanismus (4) mit einer Drehbewegung in die Vorlaufrichtung des Stücks (1) getragen wird, der die Spitze (5) des Darms (6) spannt, und dass die Achse (30) Anstiegsmittel (31) umfasst, die den klammerartigen Mechanismus (4) veranlassen, nach unten zu gehen, wenn er den Darm (6) abwärts zieht, und ihn am Ende des Schälens anheben.

13. Maschine nach Anspruch 8, **dadurch gekennzeichnet, dass** der zweite klammerartige Mechanismus (42) einen motorisierten Schlitten (44) umfasst, der den zweiten klammerartigen Mechanismus (42) über der Schale (41) bewegt, und dass die Schale (41) eine Verlängerung (47) umfasst, die sich erstreckt und den Raum zwischen dem ersten klammerartigen Mechanismus (4) und dem zweiten (42) abdeckt, und dass es die Verlängerung (47) einsammelt, während das Stück (1) über der Schale (41) vorwärtsläuft.

14. Maschine nach Anspruch 8, **dadurch gekennzeichnet, dass** die einen dritten klammerartigen Mechanismus (43) zwischen dem ersten (4) und dem zweiten (42) umfasst, der den gelösten Darm (6) vom Stück (1) ergreift.

## Revendications

1. Méthode d'épluchage de saucissons secs, du type comprenant les phases suivantes :
une première phase pendant laquelle une pièce de produit (1) est posée sur un plateau-guide (2) et ladite pièce (1) est située à l'extrémité dudit plateau-guide (2),
une deuxième phase pendant laquelle la pièce de produit (1) est immobilisée par un dispositif d'immobilisation (3).
une troisième phase pendant laquelle un premier mécanisme de type pince (4) capture le bout (5) du boyau (6) qui enveloppe le produit (1) et tire dessus, en l'étirant,
une quatrième phase pendant laquelle un dispositif de coupe (7) coupe le bout du boyau (6) sans le séparer complètement, une cinquième phase pendant laquelle un premier mécanisme de type pince (4) tire sur le boyau (6) vers le bas,
une sixième phase pendant laquelle le dispositif d'immobilisation (3) libère la pièce (1),
une septième phase pendant laquelle un dispositif de déplacement vers l'avant (8) déplace la pièce (1) vers l'avant, la pièce passe en même temps sur le dispositif de coupe (7), lequel coupe le boyau (6), le boyau (6) étant séparé vers le bas par l'action du mécanisme de type pince (4),
une huitième phase pendant laquelle, une fois le boyau (6) séparé, le premier mécanisme de type pince (4) et le dispositif de coupe (7) reviennent à leur position initiale,
**caractérisée en ce qu**'elle comprend :
une neuvième phase pendant laquelle la pièce (1) est poussée vers un nouveau poste de travail (40) qui comprend un plateau (41) où est posée la pièce (1), où elle est attrapée par un deuxième mécanisme de type pince (42) qui se déplace le long du plateau (41), le deuxième mécanisme de type pince (42) tirant la pièce (1), ledit deuxième mécanisme de type pince (42) libérant la pièce (1) du boyau (6).

2. Une méthode conformément à la revendication 1, **caractérisée en ce que**, pendant la troisième phase, un premier mécanisme de type pince (4) tire le bout (5), en l'étirant et en formant un cône tendu.

3. Une méthode conformément à la revendication 1, **caractérisée en ce que**, pendant la septième phase, le dispositif de coupe (7) coupe le boyau (6) au moyen d'un système pivotant et de mouillage (9) qui adapte le dispositif de coupe (7) au contour de la pièce (1), et **en ce que** ledit dispositif de coupe (7) comprend des lames transversales (10) qui coupent le boyau (6) transversalement et des lames longitudinales (11) qui coupent le boyau (6) longitudinalement.

4. Une méthode conformément à la revendication 1, **caractérisée en ce que**, avant la première phase, elle comprend une phase préalable pendant laquelle des pièces (1) sont déposées sur un transporteur (20) qui avance en déchargeant au moins une pièce (1) sur un chargeur (21) qui pose la pièce (1) sur le plateau-guide (2), ladite pièce (1) étant poussée vers l'extrémité du plateau-guide (2) par un actionneur (22) qui la pousse vers ladite extrémité.

5. Une méthode conformément à la revendication 4, **caractérisée en ce que**, pendant la trajectoire de la pièce (1) qui est poussée vers l'extrémité du plateau-guide (2) par un actionneur (22), la pièce (1) est centrée par des rouleaux (24).

6. Une méthode conformément à l'une quelconque des revendications 1 ou 2, **caractérisée en ce que** le mécanisme de type pince (4) comprend un axe (30) sur lequel ledit mécanisme de type pince (4) est en appui et qui, pendant la troisième phase, tourne vers l'avant de la pièce (1) en serrant le bout (5) du boyau (6), et **en ce que** l'axe (30) comprend un dispositif de levage (32) qui, pendant la cinquième phase fait descendre le mécanisme de type pince (4) en tirant le boyau (6) vers le bas.

7. Une méthode conformément à la revendication 1, **caractérisée en ce qu'**elle comprend une dixième phase pendant laquelle un troisième mécanisme de type pince (43), situé entre le premier (4) et le deuxième (42), attrape le boyau (6), après que la pièce (1) ait été libérée du boyau (6) et ledit troisième mécanisme de type pince (43) pivote et pose le boyau (6) dans un conteneur.

8. Une machine pour éplucher des saucissons secs, du type comprenant
un plateau-guide (2), sur lequel les pièces de produit (1) à éplucher sont posées, et un dispositif d'immobilisation (3) de la pièce de produit (1) sur le plateau-guide (2),
un premier mécanisme du type pince (4) qui attrape le bout (5) du boyau (6) qui enveloppe la pièce (1), qui serre et tire dans le sens de marche de la pièce (1), et postérieurement tire vers le bas, un mécanisme de coupe (7) qui coupe le boyau (6) au bout (5) sans le couper complètement, et
un dispositif de déplacement vers l'avant (8) qui fait avancer la pièce (1), ledit dispositif de coupe (7) passant là au même moment au-dessus de la pièce (1) ledit dispositif de coupe (7) qui coupe le boyau (6) longitudinalement, le boyau (6) se séparant vers le bas par l'action du mécanisme du type pince (4).
**caractérisée en ce qu**'elle comprend un poste de travail (40) qui comprend :
un plateau (41) où la pièce (1) est posée, et
un deuxième mécanisme de type pince (42) qui attrape ladite pièce (1), et qui comprend un mouvement le long du plateau (41),
ledit deuxième mécanisme de type pince (42) tirant la pièce (1), ledit deuxième mécanisme de type pince (42) faisant sortir la pièce (1) du boyau (6).

9. Une machine conformément à la revendication 8, **caractérisée en ce que** le moyen de coupe (7) comprend un système pivotant et de mouillage (9) qui adapte le dispositif de coupe (7) au contour de la pièce (1) et coupe le boyau (6) transversalement et longitudinalement et **en ce que** le dispositif de coupe (7) comprend des lames transversales (10) qui coupent le boyau (6) transversalement et des lames longitudinales (11) qui coupent le boyau (6) longitudinalement.

10. Une machine conformément à la revendication 8, **caractérisée en ce qu'**elle comprend un transporteur (20) qui avance en déchargeant au moins une pièce (1) sur un chargeur (21) qui la pose sur un plateau-guide (2), ladite pièce (1) étant poussée vers l'extrémité du plateau-guide (2) par un actionneur (22) qui la pousse vers ladite extrémité.

11. Une machine conformément à la revendication 10, **caractérisée en ce qu'**elle comprend des rouleaux (24), centrant une pièce (1) lorsqu'elle s'approche de l'extrémité du plateau-guide (2).

12. Une machine conformément à la revendication 8, **caractérisée en ce que** le premier mécanisme de type pince (4) comprend un axe (30) sur lequel ledit mécanisme de type pince (4) est en appui avec un mouvement de rotation dans la direction de marche de la pièce (1) et qui serre le bout (5) du boyau (6) et **en ce que** l'axe (30) comprend un dispositif de levage (31) qui fait descendre le mécanisme du type pince (4) quand il tire le boyau (6) vers le bas et le fait se lever en fin d'épluchage.

13. Une machine conformément à la revendication 8, **caractérisée en ce que** le deuxième mécanisme de type pince (42) comprend un chariot motorisé (44) qui fait bouger ledit deuxième mécanisme de type pince (42) au-dessus du plateau (41) et que ledit plateau (41) comprend un dispositif d'étirage (47) qui s'étire et qui couvre l'espace entre le premier mécanisme du type pince (4) et le deuxième (42) et **en ce qu'**il récupère ledit dispositif d'étirage (47) lorsque la pièce (1) avance au-dessus dudit plateau (41).

14. Une machine conformément à la revendication 8, **caractérisée en ce qu'**elle comprend un troisième mécanisme de type pince (43), entre le premier (4) et le deuxième (42), qui attrape le boyau (6) libéré de la pièce (1).
